Europäisches Patentamt

European Patent Office

Office européen des brevets

(19)

(11) **EP 0 567 375 B1**

(12) **FASCICULE DE BREVET EUROPEEN**

(45) Date de publication et mention
de la délivrance du brevet:
**14.08.1996 Bulletin 1996/33**

(51) Int Cl.$^6$: **G21F 9/04**, C02F 1/78,
C02F 1/461

(21) Numéro de dépôt: **93400988.7**

(22) Date de dépôt: **15.04.1993**

(54) **Procédé pour l'élimination de produits organiques contenus dans des effluents liquides et installation pour la mise en oeuvre de ce procédé**

Verfahren zur Entfernung organischer Produkte aus wässrigen Flüssigkeiten und Vorrichtung zur Durchführung des Verfahrens

Process for eliminating organic products from aqueous liquids and device for applying such a process

(84) Etats contractants désignés:
**BE CH DE ES GB LI SE**

(30) Priorité: **21.04.1992 FR 9204865**

(43) Date de publication de la demande:
**27.10.1993 Bulletin 1993/43**

(73) Titulaire: **FRAMATOME**
**92400 Courbevoie (FR)**

(72) Inventeurs:
• **Brun, Christian**
**F-78500 Sartrouville (FR)**
• **Guillermier, Pierre**
**F-69006 Lyon (FR)**

• **Saurin, Pierre**
**F-78100 Saint Germain en Laye (FR)**

(74) Mandataire: **Polus, Camille et al**
**c/o Cabinet Lavoix**
**2, Place d'Estienne d'Orves**
**75441 Paris Cedex 09 (FR)**

(56) Documents cités:
**EP-A- 0 453 706          DE-A- 3 830 999**
**FR-A- 2 558 818          US-A- 3 925 176**

• **DATABASE WPI Section Ch, Week 7549,**
**Derwent Publications Ltd., London, GB; Class**
**D15, AN 75-80834W & JP-A-50 066 044**

**Description**

La présente invention concerne un procédé pour l'élimination de produits organiques contenus dans des effluents liquides, et une installation pour la mise en oeuvre de ce procédé.

Elle s'applique en particulier au traitement des effluents liquides provenant d'opérations de décontamination d'éléments entrant dans la constitution d'un réacteur nucléaire.

Il est connu de décontaminer des éléments de la partie primaire d'un réacteur nucléaire en utilisant des solutions chimiques que l'on fait circuler au contact des parties contaminées.

Ces solutions chimiques contiennent des produits organiques, notamment des acides carboxyliques, qu'il convient d'éliminer après les opérations de décontamination.

Pour des raisons écologiques, les produits organiques usagés ne peuvent pas être rejetés dans l'environnement.

De plus, le stockage d'effluents liquides contenant des produits organiques est difficilement envisageable pour plusieurs raisons. Une première raison est due au volume relativement important des effluents. Une autre raison est due au fait que les effluents liquides provenant d'opérations de décontamination contiennent également des produits radioactifs, généralement sous forme de cations métalliques, qui ne peuvent pas être stockés avec les produits organiques. En effet, les molécules organiques ont des propriétés de dissolution des métaux et de corrosion des enceintes de confinement habituellement utilisées pour le stockage des déchets radioactifs.

FR-A-2.558.818 décrit un procédé et une installation pour l'élimination à l'aide d'ozone de produits organiques contenus dans des effluents liquides.

L'invention a pour but d'éliminer les produits organiques contenus dans des effluents liquides avec des moyens simples, ne produisant pas de déchets polluants et permettant de traiter des volumes d'effluents d'au moins 200 l.

A cet effet l'invention a pour objet un procédé pour l'élimination de produits organiques contenus dans des effluenTs liquides contenant des produits radioactifs, caractérisé par le fait qu'on effectue une électrolyse des effluents préalablement à une ozonation qu'on fait subir aux effluents jusqu'à ce que la mesure du Carbone Organique Total des effluents soit inférieure à une valeur prédéterminée.

L'invention a également pour objet une installation pour la mise en oeuvre du procédé défini ci-dessus, caractérisée en ce qu'elle comprend une cellule électrolytique et des moyens de transfert des effluents liquides de la cellule électrolytique dans un réservoir d'ozonation, ce réservoir étant relié à un circuit fermé de circulation des effluents raccordé à des moyens d'injection d'ozone.

Suivant d'autres caractéristiques de cette installation :

- les moyens d'injection d'ozone comprennent un ozoneur raccordé à une trompe d'injection d'ozone dont l'extrémité amont est alimentée en effluents liquides par une pompe raccordée au réservoir d'ozonation et dont l'extrémité aval est raccordée au réservoir d'ozonation;
- le réservoir d'ozonation est relié à des moyens de prélèvement d'effluents en cours d'ozonation, ces moyens permettant de fournir des échantillons d'effluents à des moyens de mesure de Carbone Organique Total ;
- les moyens de transfert comprennent une pompe auto-amorçante dont l'aspiration est reliée à la cellule électrolytique par l'intermédiaire d'une vanne et dont le refoulement est relié au réservoir d'ozonation.

Des exemples de réalisation de l'invention seront décrits ci-dessous en se référant aux dessins annexés dans lesquels :

- la figure 1 est une vue schématique d'une installation selon un premier mode de réalisation de l'invention ;
- la figure 2 est une vue schématique d'une installation selon un deuxième mode de réalisation de l'invention.

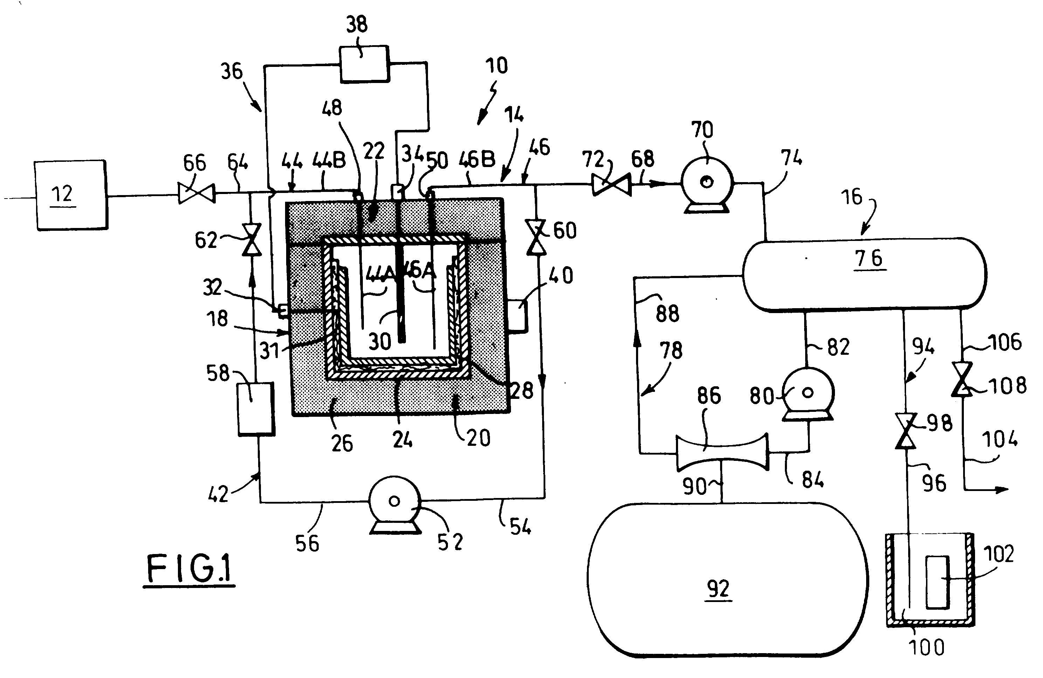

On voit sur la figure 1 une installation 10 selon un premier mode de réalisation de l'invention, pour le traitement d'un volume prédéterminé d'une solution radioactive. La solution radioactive est constituée d'effluents liquides provenant d'opérations de décontamination d'éléments de la partie primaire d'un réacteur nucléaire. Ces effluents comportent des ions métalliques et des molécules organiques, en particulier des acides carboxyliques.

L'installation 10 comporte, de la gauche vers la droite en considérant la figure 1, une cellule d'électro-électrodialyse 12, une cellule électrolytique 14, et des moyens 16 d'ozonation de la solution après électrolyse.

La cellule d'électro-électrodialyse 12 est de type connu et ne sera pas décrite.

La cellule électrolytique 14 comporte une enceinte 18 de séparation et de confinement de produits radioactifs de faible et moyenne activité. L'enceinte 18 comporte un corps 20 muni d'un couvercle 22 et des moyens de fermeture étanche de type connu, non représentés sur les figures. Les parois du corps 20 et du couvercle 22 de l'enceinte 18 sont constituées d'une enveloppe métallique interne 24 et d'une enveloppe externe 26 en béton, ces enveloppes étant adaptées pour absorber les radiations émises par les produits stockés dans l'enceinte 18.

L'enceinte 18 est adapté pour recevoir la solution radioactive en vue de son traitement par électrolyse. Dans les exemples décrits, on traite la solution par volumes d'environ 200 l.

Une cathode 28 est fixée au corps 20 de l'enceinte 18 et recouvre sa paroi interne. Une anode 30 est fixée au couvercle 22 de l'enceinte 18 et s'étend à l'intérieur de celle-ci.

La cathode 28 est d'un type connu dit "volumique". Ce type de cathode comporte une grande surface de contact par unité de volume d'électrolyte et permet de réaliser des transferts d'ions de l'électrolyte (effluents liquides) vers la cathode à des vitesses élevées. Ce type de cathode est constitué par exemple d'une mousse métallique ou d'un déployé métallique.

L'anode 30 est de type connu, par exemple en graphite.

La cathode 28 est isolée électriquement de l'enveloppe métallique interne 24 par une couche 31 isolante intermédiaire de peinture ou de vernis. L'anode 30 est également isolée électriquement de l'enveloppe métallique 24 du couvercle 22 par des moyens connus non représentés sur les figures.

La cathode 28 et l'anode 30 comportent des moyens 32,34 de connexion à un circuit 36 d'alimentation électrique muni d'un générateur de courant 38. Les moyens 32,34 de connexion sont de type connu et sont accessibles depuis l'extérieur de l'enceinte 18.

Un télédétecteur 40 de mesure du débit de dose du rayonnement émis par les produits contenus dans l'enceinte 18 à l'extérieur de celle-ci est disposé sur la surface externe de l'enceinte 18.

La cellule électrolytique 14 est reliée à un circuit fermé 42 de mise en circulation de l'électrolyte, d'une part par un conduit 44 d'alimentation en effluents liquides, et d'autre part par un conduit 46 d'évacuation des effluents liquides.

Le conduit 44 d'alimentation en effluents liquides comporte un premier tronçon 44A interne à l'enceinte 18 et un second tronçon 44B externe à l'enceinte 18. Les deux tronçons 44A,44B sont reliés entre eux par des moyens 48 de raccordement de type connu, accessibles depuis l'extérieur de l'enceinte 18.

De même, le conduit 46 d'évacuation d'effluents liquides comporte un tronçon 46A interne et un tronçon 46B externe reliés entre eux par des moyens 50 de raccordement accessibles depuis l'extérieur de l'enceinte 18.

Le circuit fermé 42 comporte une pompe 52 de circulation dont l'aspiration est reliée par un conduit 54 au conduit d'évacuation 46, et dont le conduit de refoulement 56 est relié au conduit d'alimentation 44.

Le conduit de refoulement 56 comporte des moyens 58 de mesure de l'activité du rayonnement gamma de la solution formant l'électrolyte.

La cellule électrolytique 14 peut être isolée du circuit fermé 42 au moyen d'une première vanne 60 disposée sur le conduit d'aspiration 54 et d'une seconde vanne 62 disposée sur le conduit de refoulement 56.

La cellule électrolytique 14 est reliée à la cellule d'électro-électrodialyse 12 par des moyens de transfert du volume de solution radioactive comprenant un conduit 64 reliant la cellule 12 d'électro-électrodialyse au conduit d'alimentation 44 de la cellule 14 électrolytique. Le conduit 64 de transfert de solution est muni d'une vanne 66 permettant d'isoler la cellule 12 d'électro-électrodialyse de la cellule 14 d'électrolyse.

On décrira maintenant les moyens 16 d'ozonation. Ces moyens 16 comportent des moyens de transfert du volume de solution après électrolyse comprenant un conduit 68 reliant le conduit d'évacuation 46 de la cellule électrolytique 14 à l'aspiration d'une pompe auto-amorçante 70. Ce conduit 68 comporte une vanne 72 permettant d'isoler la pompe auto-amorçante 70 de la cellule électrolytique 14.

Le refoulement de la pompe auto-amorçante 70 est relié par un conduit 74 à un réservoir 76 de circulation de la solution.

Le réservoir 76 de circulation est relié à un circuit fermé 78 d'injection d'ozone comprenant une pompe 80 dont l'aspiration est raccordée par un conduit 82 au réservoir 76 de circulation et dont le refoulement est raccordé par un conduit 84 à l'extrémité amont d'une trompe 86 d'injection d'ozone. L'extrémité aval de la trompe 86 est raccordée par un conduit 88 au réservoir 76 de circulation.

La trompe 86 d'injection d'ozone est reliée à un ozoneur 92 par des moyens connus comprenant un conduit 90.

Le réservoir 76 de circulation est relié également à des moyens 94 de prélèvement d'échantillons de solution en cours d'ozonation. Ces moyens 94 comportent un conduit 96 muni d'une vanne 98, reliant le réservoir 76 de circulation à un récipient 100 de prélèvement d'échantillons. Ce récipient 100 est associé à des moyens 102 de mesure du Carbone Organique Total d'un échantillon de solution.

Le réservoir 76 de circulation est raccordé à des moyens 104 de vidange de la solution après ozonation. Ces moyens 104 comprennent un conduit 106, muni d'une vanne 108, reliant le réservoir 76 de circulation à des moyens d'évacuation non représentés sur les figures. Ces moyens d'évacuation sont par exemple raccordés à un collecteur d'effluents d'une centrale nucléaire ou à l'égout de cette centrale.

On décrira maintenant le procédé de traitement d'une solution contenant des produits radioactifs et des molécules organiques, mettant en oeuvre l'installation 10 selon le premier mode de réalisation de l'invention.

Un volume prédéterminé de solution radioactive, d'environ 200l, subit successivement une électro-électrodialyse dans la cellule 12, une électrolyse dans la cellule 14 et une ozonation grâce aux moyens d'ozonation 16.

Dans un premier temps, on fait subir une électro-électrodialyse à la totalité du volume de solution radioactive de façon à augmenter la concentration des produits radioactifs dans la solution. Cette étape est facultative et peut être supprimée ou substituée par un ajout d'un électrolyte-support dans la solution, comme nous le décrirons ultérieurement dans un second mode de réalisation de l'invention.

Pendant l'électro-électrodialyse, la vanne 66 est fermée de façon à isoler la cellule d'électro-électrodialyse 12 de la cellule électrolytique 14.

Après électro-électrodialyse, la totalité du volume de solution radioactive est transférée dans la cellule électrolytique 14 pour y subir une électrolyse.

Pendant l'électrolyse, la vanne 66 placée entre la cellule d'électro-électrodialyse 12 et la cellule électrolytique 14 ainsi que la vanne 72 placée entre cette cellule 14 et les moyens d'ozonation 16 sont fermées. Les vannes 60,62 à l'aspiration et au refoulement de la pompe de circulation 52 sont ouvertes afin de faire circuler la solution dans le circuit 42.

Au cours de l'électrolyse, les cations radioactifs se déposent sur la cathode volumique 28. De cette façon, la solution s'appauvrit en cations radioactifs et l'activité du rayonnement gamma baisse. L'évolution de l'activité du rayonnement gamma est suivie grâce aux moyens de mesure 58. Lorsque l'activité du rayonnement gamma est inférieure à une seuil prédéterminé, ce seuil dépendant notamment des normes nationales, on arrête l'électrolyse.

La totalité du volume de solution est ensuite transférée dans le réservoir 76 d'ozonation par la pompe de transfert 70, après ouverture de la vanne 72.

Tant que le débit de dose de rayonnement émis par le contenu de l'enceinte 18 à l'extérieur de celle-ci est inférieur à un seuil prédéterminé, on effectue des électrolyses successives de volumes de solution radioactive selon les étapes précédentes. Lorsque ce débit de dose dépasse le seuil prédéterminé, on enlève l'enceinte 18 de l'installation 10 et on la remplace par une nouvelle enceinte. L'enceinte 18 contenant les produits radioactifs est ensuite placée dans une unité de stockage en laissant à l'intérieur de celle-ci les tronçons internes 44A, 46A des conduits d'alimentation et d'évacuation de solution, la cathode 28 sur laquelle se sont déposés les cations radioactifs et l'anode 30.

Préalablement au stockage de l'enceinte 18, il est possible de couler du béton à l'intérieur de celle-ci . Le béton est introduit par l'extrémité extérieure débouchante d'un tronçon interne 44A, 46A du conduit 44 d'alimentation ou du conduit 46 d'évacuation, après avoir séparé ce tronçon interne 44A, 46A du tronçon externe 44B, 46B correspondant.

On décrira maintenant le traitement de la solution après électrolyse. Cette solution contient des molécules organiques à éliminer.

Après électrolyse, la solution comporte une quantité négligeable d'éléments radioactifs et l'ozonation tion permet de détruire les produits organiques contenus dans la solution, en particuliers les acides carboxyliques.

L'ozonation de la solution se fait en faisant circuler cette solution dans le circuit d'ozonation 78. L'ozone détruit les molécules organiques en les oxydant.

En particulier, l'oxydation des molécules d'acides carboxyliques de la solution se fait suivant la réaction chimique ci-dessous :

$$3C_nH_{2n+1}COOH+(3n+1)O_3 \rightarrow (3n+3)CO_2+(3n+3)H_2O$$

L'ozone consommée par la solution est renouvelée de façon continue au moyen de la trompe 86 d'injection d'ozone.

Pendant l'ozonation, on effectue des prélèvements d'échantillons grâce aux moyens de prélèvement 94 de façon à mesurer le Carbone Organique Total de la solution. Lorsque la valeur du Carbone Organique Total est inférieure à une valeur de seuil, correspondant à la destruction de la plupart des molécules organiques, on vidange la totalité de la solution grâce aux moyens 104.

Selon l'état final de la solution et selon le type de centrale nucléaire, on rejette la solution après ozonation dans un égout ou dans un collecteur d'effluents de la centrale.

Les opérations d'électro-électrodialyse, d'électrolyse et d'ozonation se font de façon indépendante. Ainsi, dès qu'une de ces opérations est terminée, on peut recommencer celle-ci avec une nouvelle solution.

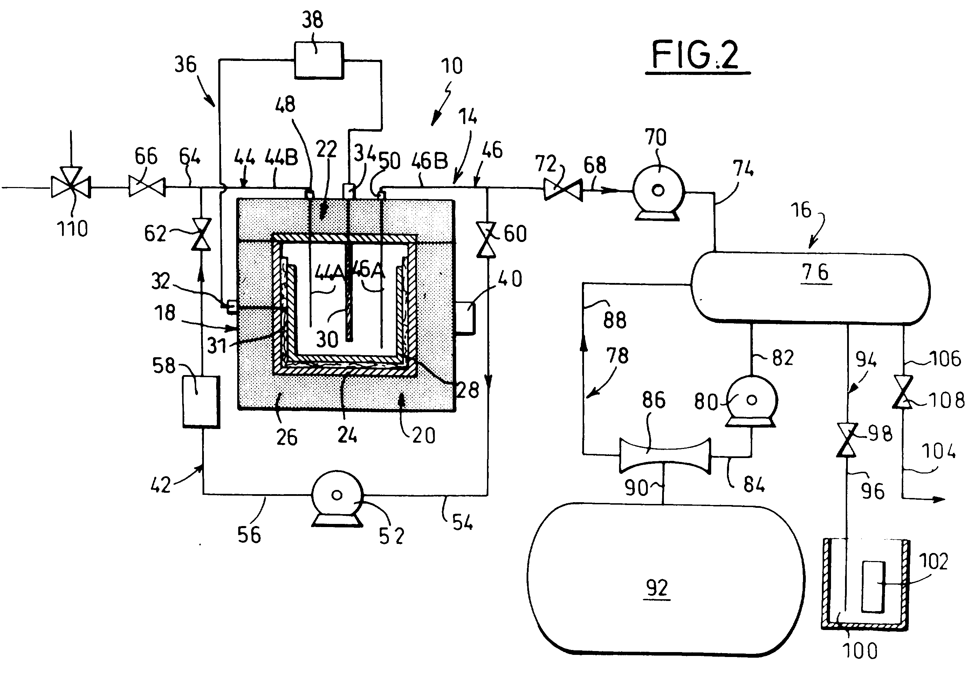

On décrira ci-dessous un second mode de réalisation de l'invention en regard de la figure 2. Sur cette figure, les éléments analogues à ceux de la figure 1, ayant des fonctions analogues, sont désignés par des références identiques.

Sur la figure 2 on a représenté une installation 10 comportant une cellule électrolytique 14 pour le traitement d'une solution radioactive comportant des ions métalliques et des molécules organiques. A la différence du premier mode de réalisation de l'invention, l'installation 10 ne comporte pas de cellule d'électro-électrodialyse.

Dans ce second mode de réalisation de l'invention, l'installation 10 comporte des moyens 110 d'injection d'un d'électrolyte-support dans le volume de solution radioactive avant électrolyse. L'électrolyte-support comporte par exemple des sels de fer, de cobalt ou de nickel. L'ajout d'un électrolyte-support permet d'augmenter la conductivité de la solution et améliore ainsi le rendement de l'électrolyse.

Sur la figure 2 on voit que les moyens d'injection d'électrolyte-support comprennent une vanne trois voies 110 permettant d'ajouter l'électrolyte-support au moment du transfert de la solution dans la cellule électrolytique 14.

Le procédé de traitement de la solution radioactive mettant en oeuvre l'installation 10 selon le second mode de réalisation de l'invention comporte successivement un ajout d'électrolyte-support dans un volume prédéterminé de solution radioactive, l'électrolyse de la solution radioactive et l'ozonation de la solution après électrolyse.

Ces opérations sont indépendantes et s'enchaînent de façon analogue aux opérations décrites dans le cas du premier mode de réalisation de l'invention.

L'invention ne se limite pas aux deux modes de réalisation décrits. En particulier il est possible de n'effectuer aucune opération préalablement à l'électrolyse de la solution radioactive. On peut effectuer au choix un ajout d'électrolyte-support ou bien une électro-électrodialyse préalablement à l'électrolyse de la solution.

L'invention permet de traiter les effluents liquides produits au cours d'opérations de décontamination d'éléments de la partie primaire d'un réacteur nucléaire. Elle permet d'effectuer facilement la destruction des molécules organiques qui sont difficiles à stocker et qu'on ne peut pas rejeter dans l'environnement.

L'électrolyse qui précède l'ozonation des effluents liquides permet d'extraire les produits radioactifs contenus dans les effluents et d'éviter la contamination radioactive des moyens d'ozonation.

## Revendications

1. Procédé pour l'élimination de produits organiques contenus dans des effluents liquides contenant des produits radioactifs, caractérisé par le fait qu'on effectue une électrolyse (14) des effluents préalablement à une ozonation (16) qu'on fait subir aux effluents jusqu'à ce que la mesure du Carbone Organique Total des effluents soit inférieure à une valeur prédéterminée.

2. Installation pour la mise en oeuvre du procédé selon la revendication 1, caractérisée en ce qu'elle comprend une cellule électrolytique (14) et des moyens (70, 72) de transfert des effluents liquides de la cellule électrolytique (14) dans un réservoir (76) d'ozonation, ce réservoir (76) étant relié à un circuit fermé (78) de circulation des effluents raccordé à des moyens (80, 90, 92) d'injection d'ozone.

3. Installation selon la revendication 2, caractérisée en ce que les moyens d'injection d'ozone comprennent un ozoneur (92) raccordé à une trompe (86) d'injection d'ozone dont l'extrémité amont est alimentée en effluents liquides par une pompe (80) raccordée au réservoir d'ozonation (76) et dont l'extrémité aval est raccordée au réservoir d'ozonation (76).

4. Installation selon la revendication 2 ou 3, caractérisée en ce que le réservoir d'ozonation (76) est relié à des moyens (94) de prélèvement d'effluents en cours d'ozonation, ces moyens (94) permettant de fournir des échantillons d'effluents à des moyens (102) de mesure de Carbone Organique Total.

5. Installation selon l'une quelconque des revendications 2 à 4, caractérisée en ce que les moyens de transfert comprennent une pompe auto-amorçante (70) dont l'aspiration est reliée à la cellule électrolytique (14) par l'intermédiaire d'une vanne (72) et dont le refoulement est relié au réservoir (76) d'ozonation.

## Patentansprüche

1. Verfahren zur Entfernung organischer Verbindungen, die in flüssigen Abfällen enthalten sind, die radioaktive Stoffe enthalten, dadurch gekennzeichnet, daß vor einer Ozonisierung (16) eine Elektrolyse (14) der flüssigen Abfälle durchgeführt wird, wobei die flüssigen Abfälle so lange der Ozonisierung unterzogen werden, bis die Messung des Gesamtgehalts an organischem Kohlenstoff der flüssigen Abfälle einen Wert ergibt, der kleiner als ein vorbestimmter Wert ist.

2. Vorrichtung zur Durchführung des Verfahrens nach Anspruch 1, dadurch gekennzeichnet, daß sie eine Elektrolysezelle (14) und Mittel (70, 72) zum Fördern der flüssigen Abfälle von der Elektrolysezelle (14) in einen Ozonisierungsbehälter (76) aufweist, wobei dieser Ozonisierungsbehälter (76) mit einem geschlossenen Kreislauf (78) zur Umwälzung der flüssigen Abfälle verbunden ist, der mit Mitteln (80, 90, 92) zum Injizieren von Ozon verbunden ist.

3. Vorrichtung nach Anspruch 2, dadurch gekennzeichnet, daß die Mittel zum Injizieren von Ozon einen Ozonisator (92) umfassen, der mit einer Strahlpumpe (86) zum Injizieren des Ozons verbunden ist, deren stromaufwärts gelegenes Ende durch eine Pumpe (80), die mit dem Ozonisierungsbehälter (76) verbunden ist, mit den flüssigen Abfällen versorgt wird, und deren stromabwärts gelegenes Ende mit dem Ozonisierungsbehälter (76) verbunden ist.

4. Vorrichtung nach Anspruch 2 oder 3, dadurch gekennzeichnet, daß der Ozonisierungsbehälter (76) mit Mitteln (94) zur Entnahme von flüssigem Abfall während der Ozonisierung verbunden ist, wobei diese Mittel (94) Proben der flüssigen Abfälle an eine Einrichtung (102) zur Messung des Gesamtgehalts an organischem Kohlenstoff zu liefern vermögen.

5. Vorrichtung nach einem der Ansprüche 2 bis 4, dadurch gekennzeichnet, daß die Mittel zum Fördern eine selbstansaugende Pumpe (70) umfassen, deren Ansaugseite über ein Ventil (72) mit der Elektrolysezelle (14) verbunden ist und deren Förderseite mit dem Ozonisierungsbehälter (76) verbunden ist.

## Claims

1. Process for eliminating organic products contained in liquid effluents containing radioactive products, characterised in that the effluents undergo electrolysis (14) prior to an ozonising process (16) to which the effluents are subjected until the measurement of Total Organic Carbon in the effluents is below a predetermined level.

2. Installation for carrying out the process according to claim 1, characterised in that it comprises an electrolytic cell (14) and means (70, 72) for transferring the liquid effluents from the electrolytic cell (14) to an ozonisation reservoir (76), this reservoir (76) being connected to a closed circuit (78) for circulating the effluents, which is connected to means (80, 90, 92) for injecting ozone.

3. Installation according to claim 2, characterised in that the ozone injecting means comprise an ozoniser (92) connected to an ozone injecting pump (86) the upstream end of which is supplied with liquid effluents by a pump (80) connected to the ozonisation reservoir (76) whilst the downstream end is connected to the ozonisation reservoir (76).

4. Installation according to claim 2 or 3, characterised in that the ozonisation reservoir (76) is connected to means (94) for sampling effluents in the course of ozonisation, these means (94) enabling samples of effluents to be delivered to means (102) for measuring the Total Organic Carbon.

5. Installation according to one of claims 2 to 4, characterised in that the transfer means comprise a self-priming pump (70) the intake of which is connected to the electrolytic cell (14) via a valve (72) and the delivery of which is connected to the ozonisation reservoir (76).

FIG.1

FIG.2

EP 0 567 375 B1